# EUROPÄISCHE PATENTANMELDUNG

(11) **EP 1 616 742 A1**
(43) Veröffentlichungstag der Anmeldung: **18.01.2006**
(21) Anmeldenummer: 04016779.3
(22) Anmeldetag: 16.07.2004
(51) Int. Cl.: B60K 17/08

(54) **Antriebseinheit eines Kleinfahrzeuges**

(71) Anmelder: BRP-Rotax GmbH & Co. KG, 4623 Gunskirchen (AT)
(72) Erfinder: Ennsmann, Roland, 4600 Wels (AT)

(57) **Zusammenfassung**

Die Erfindung betrifft eine Antriebseinheit 1 eines Fahrzeuges, insbesondere eines All-Terrain-Vehicle, mit einer V-Verbrennungskraftmaschine 2 und einem Getriebe 4, das mit seiner Getriebeeingangswelle 12 samt Getriebegehäuse 13 achsparallel zur Kurbelwelle 7 der V-Verbrennungskraftmaschine 2 seitlich neben der Verbrennungskraftmaschine 2 angeordnet ist. Erfindungsgemäß ist das Getriebe 4 innerhalb der größten Ausdehnung der Verbrennungskraftmaschine 2 mit seinem Getriebegehäuse 13 an die Verbrennungskraftmaschine 2 angeflanscht.

## Beschreibung

Die Erfindung betrifft eine Antriebseinheit eines Kleinfahrzeuges, insbesondere eines All-Terrain-Vehicle, mit einer V-Verbrennungskraftmaschine und einem Getriebe, das mit seiner Getriebeeingangswelle samt Getriebegehäuse achsparallel zur Kurbelwelle der V-Verbrennungskraftmaschine seitlich neben der Verbrennungskraftmaschine angeordnet ist.

Bei derartigen Fahrzeugen umfaßt der Antriebsstrang beispielsweise eine quer zur Fahrtrichtung in ein Fahrgestell des Fahrzeuges eingebaute Verbrennungskraftmaschine, die wahlweise eine Achse des Fahrzeuges oder alle Achsen des Fahrzeuges antreibt. Üblicherweise ist das Getriebe direkt stirnseitig an die Kurbelwelle bzw. an die Verbrennungskraftmaschine angeflanscht, wodurch sich ein erheblicher Platzbedarf aufgrund der nicht unerheblichen Länge der Baueinheit Verbrennungskraftmaschine, Kupplung und Getriebe ergibt. Aufgrund der erheblichen Baugröße kann der Schwerpunkt des Fahrzeuges durch Plazierung der Antriebseinheit im Fahrzeug kaum beeinflußt werden, da bei derartigen großen Antriebseinheiten kaum Freiheiten bezüglich der Anordnung gegeben sind.

Weiters besteht die Möglichkeit sowohl Motor als auch Getriebe in Längsrichtung des Fahrzeuges anzuordnen, wodurch zwar das Gewicht besser auf beide Achsen des Fahrzeuges verteilt wird, jedoch ebenfalls keine ausreichende Anpassungsfähigkeit hinsichtlich der Einbaulage, wie sie insbesondere bei Verwendung in einem geländegängigen ATV wünschenswert ist, gegeben ist.

Weiters ist es bekannt (DE 41 07 286 A1) eine Verbrennungskraftmaschine längs innerhalb des Fahrzeuges einzubauen und das Getriebe parallel neben der Verbrennungskraftmaschine anzuordnen. Eine Differentialeinheit, welche die Leistung vom Getriebe auf ein rechtes und ein linkes Rad überträgt, befindet sich vor dem Getriebe in Längsrichtung des Fahrzeuges zwischen der Motorabtriebswelle und der Getriebeabtriebswelle. Mit dieser Anordnung wird zwar eine erheblich Verkürzung des Antriebsstranges erzielt, ergibt sich aber im Gegenzug dazu eine erhebliche Verbreiterung des Antriebsstranges mit den gleichen Nachteilen, wie sie ein gangs bereits angeführt wurden. Eine kompakte Antriebseinheit kann auch mit dieser bekannten Anordnung von Verbrennungskraftmaschine, Kupplung und Getriebe nicht erzielt werden.

Der Erfindung liegt somit die Aufgabe zugrunde, eine Antriebseinheit für ein Fahrzeug der eingangs geschilderten Art zu schaffen, welche besonders kompakt baut, also über möglichst geringe Außenabmessungen verfügt, und dabei günstig zu fertigen als auch zu warten ist.

Die Erfindung löst diese Aufgabe dadurch, daß das Getriebe innerhalb der größten Ausdehnung der Verbrennungskraftmaschine mit seinem Getriebegehäuse über einen Befestigungsflansch abnehmbar seitlich an die Verbrennungskraftmaschine angeflanscht ist.

Durch die lösbare Befestigung des Getriebegehäuses an den Verbrennungsmotor kann das Getriebe vom Motor wiederum abgenommen werden falls das, wie beispielsweise zu Anwendung als Antriebsaggregat eines Motorschlittens, nötig sein sollte. Weiters kann das Getriebegehäuse einen zum Motorölkreislauf getrennten Getriebeölkreislauf ausbilden, wodurch spezielles Getriebeöl zur Schmierung des Getriebes verwendet werden kann. Sollte bei einer Anwendung der Antriebseinheit kein, insbesondere schaltbares, Getriebe nötig sein, weil beispielsweise der Abtrieb von der Kurbelwelle direkt, vorzugsweise über ein CVT-Getriebeauf eine Antriebswelle übertragen werden, kann das Getriebe von der Verbrennungskraftmaschine abgenommen und der entsprechende Flansch an der Verbrennungskraftmaschine über eine geeignete Abdeckvorrichtung, insbesondere ein Abdeckblech, verschlossen werden.

Aus dem Stand der Technik bekannte V-Motoren weisen eine integrierte Motor-Getriebeeinheit auf. Hierdurch ist, durch die nicht vom Motor trennbare Getriebeeinheit, das Anwendungsgebiet einer solchen Antriebseinheit beschränkt. Aufgrund der integrierten und offenen Bauweise des Motor-Getrieberaums kann kein Getriebeöl zur Schmierölversorgung des Getriebes verwendet werden.

Nach einer besonderen Ausführungsform der erfindungsgemäßen Antriebseinheit sind die Kurbelwelle und Getriebeeingangswelle über ein CVT-Getriebe miteinander antriebsverbunden.

Mit der Kombination von CVT - Getriebe und einem an die Verbrennungskraftmaschine angeflanschten Getriebe, mit dem wahlweise zwischen schnellem und geländegängigem, langsamen Vorwärtsgang eine Übersetzungsvorwahl getroffen werden kann, ergibt sich aufgrund der seitlichen Anflanschung des Getriebegehäuses innerhalb der größten Ausdehnung der Verbrennungskraftmaschine eine besonders kompakte Bauweise, da die Baubreite der Verbrennungskraftmaschine durch das Anflanschen des Getriebegehäuses nur unwesentlich verbreitert wird und somit der Einsatz der erfindungsgemäßen Antriebseinheit selbst unter beengtesten Platzverhältnissen problemlos möglich ist. Zudem kann die erfindungsgemäße Antriebseinheit aufgrund ihrer kompakten Bauweise einfach über weite Bereiche im Fahrzeugrahmen in eine gewünschte Einbaulage versetzt werden, um insbesondere ein möglichst neutrales Fahrverhalten des Fahrzeuges durch eine möglichst schwerpunktnahe Anordnung der schweren Antriebseinheit zu gewährleisten. Die erfindungsgemäße Antriebseinheit eignet sich sowohl für Fahrzeuge mit im vorderen Teil angeordnetem Motor zum Antrieb der Vorderräder als auch für Fahrzeuge mit im mittleren oder hinteren Teil angeordnetem Motor zum Antrieb von Hinterrädern sowie für den Einsatz in Fahrzeugen mit Allradantrieb.

Dadurch, daß das Getriebegehäuse vorzugsweise an das Kurbelgehäuse und/oder die Ölwanne der Verbrennungskraftmaschine angeflanscht ist, ist eine einfache und platzsparende Montage einerseits gewährleistet, sowie ein rasches Demontieren des Getriebegehäuses zu Wartungszwecken od. dgl. sichergestellt. Damit wird zudem kein Bauraum zwischen Kurbelgehäuse bzw. Ölwanne und Getriebegehäuse verschwendet.

Besonders kompakte Bauverhältnisse ergeben sich, wenn bei Vorsehen eines Kegelradgetriebes zum Antrieb der Vorder- und/oder Hinterachse, dieses Kegelradgetriebe ebenfalls im Getriebegehäuse angeordnet ist, wobei die Abtriebswellen des Kegelradgetriebes vorzugsweise quer zur Getriebeeingangswelle im Getriebe gehäuse angeordnet sind, um damit direkt und auf besonders platzsparende Weise die jeweilige Achse des Fahrzeuges antreiben zu können.

Um in diesem Fall die Bauhöhe der Antriebseinheit nicht zu erhöhen, empfiehlt es sich, wenn eine der beiden Abtriebswellen des Kegelradgetriebes das Kurbelgehäuse und/oder die Ölwanne durchragt. In diesem Zusammenhang hat es sich als günstig erwiesen, wenn die Abtriebswelle das Kurbelgehäuse und/oder die Ölwanne im Bereich zwischen zwei Kurbelwangen der Kurbelwelle vorzugsweise unterhalb eines Kurbelwellenhauptlagers durchragt.

Als Schaltkupplung zwischen Kurbelwelle und Getriebeeingangswelle empfiehlt sich insbesondere eine Fliehkraftkupplung, welche in an sich bekannter Weise vorzugsweise als Teil des CVT-Getriebes, also des stufenlosen Riemengetriebes, ausgebildet ist.

Die Erfindung betrifft weiters eine Antriebseinrichtung gemäß Anspruch 9 sowie eine Antriebseinrichtung gemäß Anspruch 10.

In der Zeichnung ist die Erfindung schematisch anhand eines Ausführungsbeispieles dargestellt. Es zeigen:

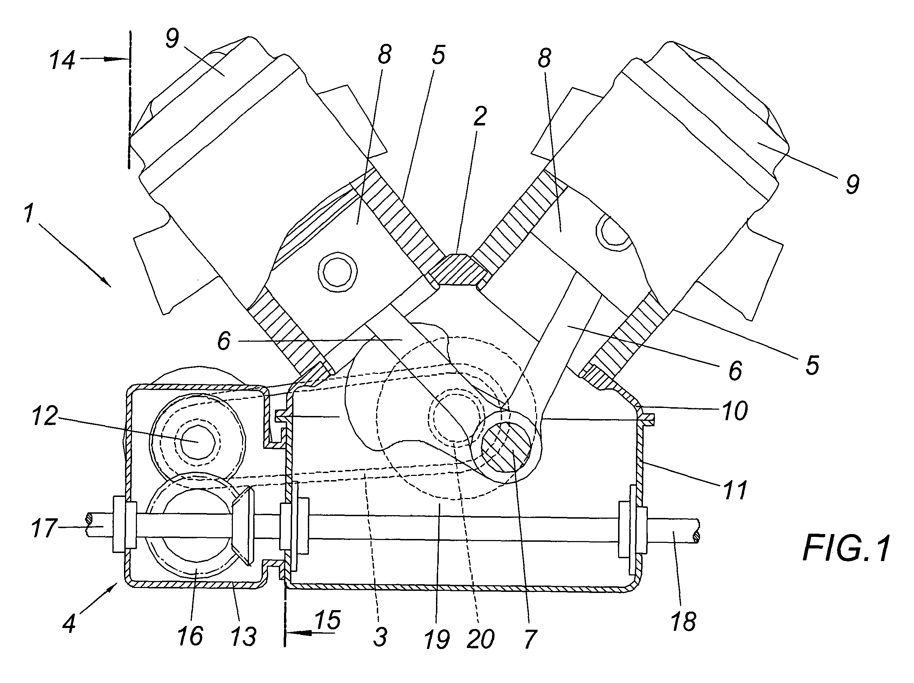

Fig. 1 eine erfindungsgemäße Antriebseinheit im Querschnitt und

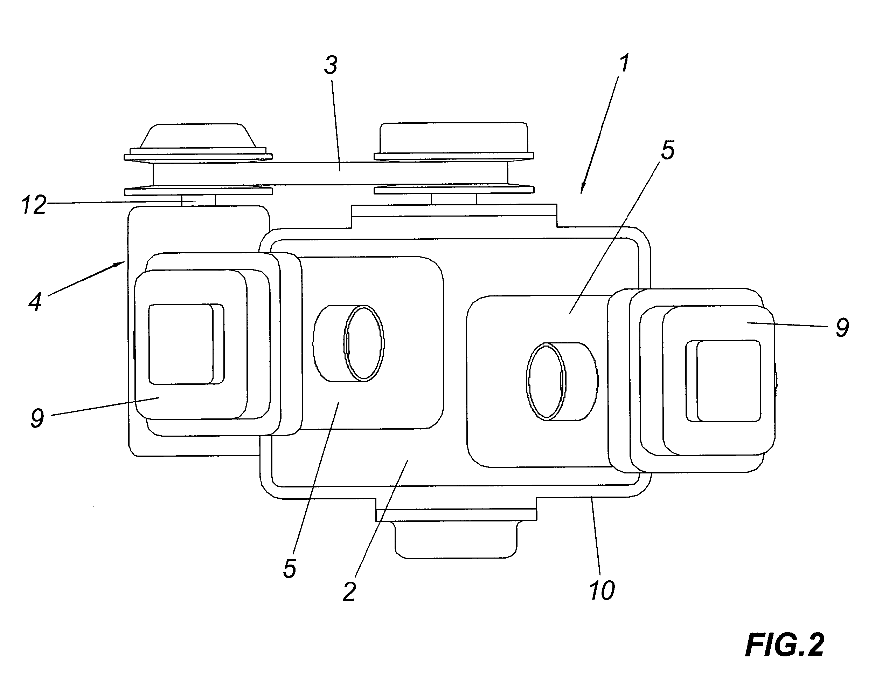

Fig. 2 die Antriebseinheit aus Fig. 1 in Draufsicht.

Das in den Zeichnungen dargestellte Ausführungsbeispiel einer Antriebseinheit 1 für ein ATV umfaßt eine schematisch dargestellte Zweizylinder-V-Verbrennungskraftmaschine 2, ein CVT-Getriebe 3 mit einer in das CVT-Getriebe integrierten, nicht näher dargestellten Fliehkraftkupplung, sowie ein Getriebe 4, insbesondere ein schaltbares Zahnradgetriebe. Die Verbrennungskraftmaschine 2 besteht in üblicher Weise aus zwei V-förmig zueinander angeordneten Zylindern 5, in denen je ein über ein Pleuel 6 mit einer Kurbelwelle 7 antriebsverbundener Kolben 8 geführt ist und welche Zylinder kopfseitig einen Zylinderkopf 9 tragen. Die Kurbel welle 7 ist in einem Kurbelgehäuse 10 gelagert, welches nach unten hin von einer Ölwanne 11 abgeschlossen ist.

Das Getriebe 4 ist mit seiner Getriebeeingangswelle 12 samt Getriebegehäuse 13 achsparallel zur Kurbelwelle 7 seitlich der Zweizylinder-V-Verbrennungskraftmaschine angeordnet, wobei das Getriebe 4 mit seinem Getriebegehäuse 13 innerhalb der größten Ausdehnung 14 der Verbrennungskraftmaschine an die Ölwanne 11 angeflanscht 15 ist. Das Getriebe 4 ist als Schaltgetriebe für einen schnellen und einen langsamen Vorwärtsgang sowie für einen Rückwärtsgang ausgebildet.

Das Getriebegehäuse 13 nimmt zusätzlich ein in der Zeichnung nur angedeutetes Kegelradgetriebe 16 auf, dessen Abtriebswellen 17, 18 quer zur Getriebeeingangswelle 12 im Getriebegehäuse 13 angeordnet sind. Die Abtriebswelle 18 durchragt die Ölwanne 11 im Bereich zwischen zwei Kurbelwangen 19, der Kurbelwelle 7 unterhalb eines Kurbelwellenhauptlagers 20.

Die erfindungsgemäße Antriebseinheit eignet sich besonders zur Anwendung bei einem Kleinfahrzeug, insbesondere des Freizeitbereiches, insbesondere einem Motorrad, einem ATV, einem Kart, einem Aufsitzboot, einem Sportboot, einem Motorschlitten, einem 2- oder 3-rädrigen Sportfahrzeug oder einem Leichtflugzeug.

## Patentansprüche

1. Antriebseinheit eines Kleinfahrzeuges, insbesondere eines ATV, mit einer V-Verbrennungskraftmaschine und einem Getriebe, das mit seiner Getriebeeingangswelle samt Getriebegehäuse achsparallel zur Kurbelwelle der V-Verbrennungskraftmaschine seitlich neben der Verbrennungskraftmaschine angeordnet ist, wobei das Getriebe innerhalb der größten Ausdehnung der Verbrennungskraftmaschine mit seinem Getriebegehäuse über einen Befestigungsflansch abnehmbar an die Verbrennungskraftmaschine angeflanscht ist.

2. Antriebseinheit nach Anspruch 1, wobei die Kurbelwelle und die Getriebeeingangswelle über ein CVT-Getriebe miteinander antriebsverbunden sind.

3. Antriebseinheit nach Anspruch 1 oder 2, wobei das Getriebegehäuse an das Kurbelgehäuse und/oder die Ölwanne der Verbrennungskraftmaschine abnehmbar angeflanscht ist.

4. Antriebseinheit nach einem der vorhergehenden Ansprüche, wobei das Getriebegehäuse zusätzlich ein Kegelradgetriebe aufnimmt.

5. Antriebseinheit nach Anspruch 4, wobei die Abtriebswellen des Kegelradgetriebes quer zur Getriebeeingangswelle im Getriebegehäuse angeordnet ist.

6. Antriebseinheit nach Anspruch 5, wobei eine der beiden Abtriebswellen des Kegelradgetriebes das Kurbelgehäuse und/oder die Ölwanne durchragt.

7. Antriebseinheit nach Anspruch 6, wobei die Abtriebswelle im Kurbelgehäuse und/oder in der Ölwanne gelagert ist.

8. Antriebseinheit nach Anspruch 7, wobei die Abtriebswelle das Kurbelgehä u-se und/oder die Ölwanne im Bereich zwischen zwei Kurbelwangen der Kurbelwelle vorzugsweise unterhalb eines Kurbelwellenhauptlagers durchragt.

9. Antriebseinheit eines Kleinfahrzeuges, insbesondere eines ATV, mit einem Motorengehäuse eines Verbrennungsmotor und einem Getriebegehäuse eines Fahrzeuggetriebes, wobei das Motorengehäuse ein Kurbelgehäuse mit einer entlang einer Kurbelwellenachse ausgerichteten Kurbelwelle sowie zumindest zwei in V-Konfiguration entlang entsprechender Zylinderachsen ausgerichtete Zylinder aufweist und das Getriebegehäuse einen Befestigungsflansch aufweist über welchen das Getriebegehäuse an dem Motorengehäuse abnehmbar befestigbar ist, wobei das Getriebegehäuse seitlich unterhalb eines der Zylinder, innerhalb der, bezogen auf die Kurbelwellenachse, größten radialen Ausdehnung des Motors über den Befestigungsflansch an dem Motorengehäuse befestigt ist.

10. Antriebseinheit eines Kleinfahrzeuges, insbesondere eines All-Terrain-Vehicles, mit einem Verbrennungsmotor und einem, insbesondere schaltbaren, Zahnradgetriebe, wobei der Verbrennungsmotor ein Kurbelgehäuse mit einer entlang einer Kurbelwellenachse angeordneten Kurbelwelle sowie zumindest zwei in V-Anordnung positionierte Zylindergehäuse mit jeweils einem Zylinderkopfgehäuse aufweist, und wobei das Zahnradgetriebe ein Getriebegehäuse aufweist, und das Getriebegehäuse über einen Befestigungsflansch, bezogen auf die Kurbelwellenachse, seitlich neben der Kurbelwelle und lösbar am Kurbelgehäuse befestigt ist, wobei der radiale Abstand des Befestigungsflansches von der Kurbelwellenachse kleiner ist als der größte radiale Abstand eines der Zylinderkopfgehäuse des Verbrennungsmotors von der Kurbelwellenachse.
